# FASCICULE DE BREVET EUROPEEN

(11) **EP 2 206 545 B1**
(45) Date de publication et mention de la délivrance du brevet: **20.08.2014**
(21) Numéro de dépôt: 09290902.7
(22) Date de dépôt: 03.12.2009
(51) Int. Cl.: B01D 53/02, B01D 53/68, B01D 53/86

(54) **Procédé utilisant une composition à base de TiO2 pour la captation de composés halogénés contenus dans un gaz de synthèse**
Verfahren zur Verwendung einer Zusammensetzung auf TiO2-Basis zum Einfangen von in einem Synthesegas enthaltenen halogenierten Verbindungen
Process using a TiO2-based composition for capturing halogen compounds contained in a synthesis gas

(30) Priorité: 12.01.2009 FR 0900107
(43) Date de publication de la demande: 14.07.2010
(73) Titulaire: IFP Energies nouvelles, 92852 Rueil-Malmaison Cedex (FR)
(72) Inventeur: Lelias, Marc-Antoine, 30100 Ales (FR); Ducreux, Olivier, 78430 Louveciennes (FR); Chiche, David, 69007 Lyon (FR)

(56) Documents cités:
- EP-A1- 0 431 351
- EP-A1- 0 439 738
- EP-A1- 0 547 663
- EP-A1- 0 556 717
- WO-A1-2006/008317
- FR-A1- 2 830 466
- US-A- 4 935 212

## Description

La présente invention concerne le domaine de la purification de gaz de synthèse mis en oeuvre dans les procédés de synthèse Fischer-Tropsch. Elle concerne plus particulièrement l'utilisation d'une composition à base de TiO₂ comme masse de captation visant à éliminer les impuretés halogénées telles que par exemple HF, HCl, HBr, et/ou HI.

### Art antérieur

Le gaz de synthèse peut classiquement être obtenu par transformation du gaz naturel, du charbon, de résidus pétroliers lourds ou de la biomasse par des procédés tels que le vaporeformage, le reformage autotherme, ou l'oxydation partielle, ou encore par décomposition du méthanol.

Il s'agit généralement d'un mélange comprenant du monoxyde de carbone, de l'hydrogène, de la vapeur d'eau et du dioxyde de carbone, en proportions variables selon le procédé de production de gaz de synthèse utilisé. En fonction du type de charge à partir de laquelle il est obtenu, le gaz de synthèse contient en plus des impuretés, telles que par exemple des composés soufrés, azotés, halogénés, et/ou des métaux.

En particulier, on retrouve des teneurs significatives en composés halogénés, tels que par exemple HF, HCl, HBr et/ou HI, dans le gaz de synthèse provenant de la gazéification de la biomasse, du charbon, de résidus pétroliers, seuls ou en mélange ( "co-processing" selon la terminologie anglo-saxonne).

Les teneurs en composés halogénés initialement présents dans la charge à gazéifier peuvent atteindre 1000 ppm poids dans le cas du charbon, voire 10000 ppm poids dans le cas de la biomasse en fonction de sa nature et de son origine géographique. Ces composés présents dans la charge se retrouvent dans le gaz après conversion.

Les composés halogénés présents dans les gaz de synthèse non purifiés peuvent entraîner une corrosion accélérée des installations dans lesquelles ils sont mis en oeuvre, telles que par exemple les turbines à gaz dans les unités de cogénération (IGCC ou "Integrated Gasification Combined Cycle" selon la terminologie anglo-saxonne). La cogénération permet la production d'électricité et d'énergie thermique utile sous forme de vapeur d'eau ou de gaz de combustion à partir d'un combustible, tel que par exemple le gaz naturel, la biomasse, le charbon. Les gaz issus d'une installation de cogénération doivent répondre à des spécification bien particulières, liées aux exigences des procédés placés en aval. Les halogénés sont ainsi des constituants souvent rencontrés qu'il est nécessaire d'éliminer efficacement.

Les impuretés halogénées sont également susceptibles d'empoisonner les catalyseurs mis en oeuvre dans les procédés de synthèse Fischer-Tropsch ou dans les procédés de synthèse chimique tels que les procédés de synthèse du méthanol, ou encore d'atténuer les performances des matériaux utilisés dans les piles à combustibles.

A ce titre, les exigences en terme de pureté des gaz sont très sévères. Il s'agit donc d'éliminer ces impuretés halogénées, outre les autres types d'impuretés qu'il convient également d'éliminer, afin que le gaz n'en contiennent plus qu'à des teneurs résiduelles, ces teneurs résiduelles étant généralement de préférence inférieures à 10 ppb poids pour chaque constituant.

La purification peut être réalisée grâce à des procédés mettant en oeuvre l'utilisation de solvants ou de masses de captation.

La technique de lavage par solvant requiert en général l'utilisation d'un solvant basique afin de retirer les composés halogénés, acides, du gaz à traiter. Dans ce but, plusieurs types de solvant peuvent être utilisés. Des solvants contenant des amines telles que la monoéthanolamine (MEA), la diéthanolamine (DEA) ou la méthyldiéthanolamine (MDEA), classiquement utilisées pour l'élimination de gaz acides tels que par exemple H₂S ou CO₂, peuvent également être mis en oeuvre pour l'élimination des composés halogénés. Dans ce cas, les composés à éliminer réagissent chimiquement avec le solvant. Dans le cas de l'utilisation de DEA, il est également possible d'éliminer le COS, à 50% pour une élimination poussée, une étape d'hydrolyse de COS en H₂S étant nécessaire en amont de la colonne d'absorption. HCN est également éliminé, au détriment toutefois d'une dégradation irréversible du solvant. L'eau éventuellement en présence de soude peut également être utilisée pour l'élimination des impuretés halogénées.

Le procédé Rectisol™, peut également être employé pour l'élimination des gaz acides. La purification est opérée par la mise en oeuvre d'une extraction par le méthanol à des températures très basses (-40 à -60°C). Ce procédé permet également l'élimination d'autres impuretés telles que les composés soufrés, ainsi que les composés azotés (NH₃, HCN), et métaux lourds tels que l'arsenic et le mercure.

Peuvent également être employés des procédés mettant en oeuvre des solvants physiques tels que des solvants à base de mélanges de dialkyl-éther de polyéthylène glycol, ou ceux utilisant des solvants mixtes physique et chimique tels que les mélanges amines et sulfolane.
Ces procédés de lavage opèrent généralement à des températures comprises entre -80°C et 250°C, selon le type de solvant employé.

Les procédés mettant en oeuvre des masses de captation sont plus adaptés à la purification de gaz chauds. Dans ce cas, le traitement de gaz ne nécessite pas nécessairement d'abaissement de la température de celui-ci et est donc énergétiquement plus économique. Classiquement, des masses de captation telles que des solides à base de dolomite, des zéolithes, des alumines basiques ou traitées avec des métaux alcalins, ou bien encore des oxydes de zinc, peuvent être utilisées.

L'utilisation d'alumines traitées est la plus courante pour purifier des gaz à haute température.

Par exemple, le document US 6,200,544 décrit un adsorbant permettant d'éliminer l'HCl dans des gaz, l'adsorbant comprenant une alumine activée imprégnée avec un oxyde alcalin et dopée avec des phosphates et/ou des amines organiques.

Le document WO 1999/40999 décrit un procédé utilisant un adsorbant pour l'élimination de composés halogénés, tel que le chlorure d'hydrogène (HCl), présents dans des charges gazeuses ou liquides, l'adsorbant étant obtenu par dépôt sur une alumine d'au moins un élément choisi parmi les alcalins, ou parmi les alcalino-terreux et les terres rares. La préparation de l'adsorbant s'achève par une calcination à une température au moins égale à 500°C ou 600°C selon la nature du dopant.

Le document EP 0 948 995 concerne un procédé permettant l'élimination des halogénés présents en phase gazeuse ou liquide opéré à l'aide d'un adsorbant constitué d'une alumine et d'au moins un élément choisi parmi les métaux des groupes VIII, IB et IIB de la classification périodique des éléments, la teneur en élément métallique étant d'au plus 45% en poids par rapport au poids total de la composition.

Les inconvénients liés à l'utilisation des alumines basiques ou traitées avec des métaux alcalins ont trait en général , soit à leur capacité de captation en chlore insuffisante (le plus souvent de l'ordre de 8% poids), soit à leur température d'usage bien souvent limitée à 150°C, ce qui implique un refroidissement du gaz avant traitement.

Le document WO 2006 008 317 décrit l'utilisation d'une composition comportant du TiO₂ pour réaliser l'hydrolyse de COS et d'HCN contenus dans un gaz de synthèse.

La demanderesse a découvert qu'en utilisant une masse de captation particulière, à base de TiO₂ et comprenant au moins 1% en poids d'au moins un sulfate d'un métal alcalino-terreux choisi parmi le calcium, le baryum et le magnésium, il est possible d'éliminer les impuretés halogénées telles que par exemple HF, HCl, HBr, et/ou HI avec une très bonne efficacité de captation. Il a en effet été trouvé qu'en utilisant ladite composition, un mélange gazeux contenant initialement ces impuretés à des teneurs généralement de 0,1 à 1000 ppm poids, de préférence entre 10 et 10000 ppm poids peut être purifié de façon à ne plus contenir que des teneurs en impuretés halogénées inférieures à 10 ppb poids, voire inférieures à 5 ppb poids.

L'utilisation de la composition particulière telle que décrite dans la présente invention peut avantageusement être menée à des températures pouvant atteindre 350°C et de ce fait, nécessite peu ou pas d'abaissement de la température du gaz issu d'une unité de production de gaz de synthèse avant sa purification.

En outre, un autre avantage réside dans les propriétés catalytiques de la masse de captation mise en oeuvre, en particulier vis à vis des propriétés d'hydrolyse de COS et HCN décrites dans le brevet FR 2 830 466 de la demanderesse. La captation des composés halogénés n'entraîne pas de désactivation de la masse et celle-ci présente une bonne stabilité en regard des réactions d'hydrolyse de COS et HCN en présence de ces composés.

Un autre avantage a trait à la mise en oeuvre de l'invention pour la purification des gaz de synthèse utilisés dans les unités Fischer-Tropsch puisque les conditions de mise en oeuvre de ces unités et du procédé selon l'invention sont très similaires.

### Résumé de l'invention:

L'invention concerne un procédé tel que décrit dans la revendication 1 mettant en oeuvre l'utilisation d'une composition à base de TiO₂ pour la captation de composés halogénés contenus dans un gaz de synthèse, ladite composition comprenant entre 30 %poids et 99 %poids de TiO₂ et entre 1 %poids et 30 %poids d'au moins un sulfate d'un métal alcalino-terreux choisi parmi le calcium, le baryum, le strontium et le magnésium.

L'invention concerne un procédé de purification d'un gaz de synthèse mettant en oeuvre ladite composition et permettant d'éliminer lesdites impuretés halogénées. En outre, ledit procédé permet simultanément d'hydrolyser COS et HCN.

### Description détaillée

L'invention a pour objet un procédé utiliant une composition (également appelée masse de captation) à base de TiO₂ pour éliminer (capter) les impuretés halogénées telles que par exemple HF, HCl, HBr et/ou HI contenues dans un gaz de synthèse.

L'invention concerne donc un procédé de purification d'un gaz de synthèse mettant en oeuvre ladite composition et permettant d'éliminer lesdites impuretés halogénées tel que décrit dans la revendication 1.

Le gaz de synthèse peut avantageusement être obtenu via la transformation de la biomasse seule ou additionnée de charbon, du gaz naturel ou de résidus pétroliers par des procédés tel que l'oxydation partielle ou le vaporéformage, ou à partir de tout autre procédé connu de l'Homme du métier. Il comprend au moins de l'hydrogène et du monoxyde de carbone.

Puisque le gaz traité est un gaz de synthèse utilisé dans la synthèse Fischer-Tropsch, celui-ci présente le plus souvent un rapport molaire H₂/CO compris entre 0,5 et 5,0, de manière préférée entre 1,2 et 3,1 et de manière encore plus préférée entre 1,5 et 2,6. Le gaz de synthèse comprend généralement en sus une faible proportion de dioxyde de carbone (CO₂) de préférence moins de 15% en volume, voire moins de 10% en volume, ainsi qu'éventuellement de la vapeur d'eau.

En général, un gaz de synthèse comprend également de nombreuses impuretés telles que des composés soufrés (H₂S, COS, CS₂), azotés (NH₃, HCN), des halogénés (HF, HCl, HBr, HI), et également des métaux, tel que par exemple le mercure, le sélénium et des métaux carbonyles.

Les teneurs en impuretés présentes dans le gaz à l'issue de la gazéification sont fonction de la nature de la charge utilisée. Plus particulièrement, les teneurs en composés halogénés peuvent être environ comprises entre 10 et 1500 ppm poids ou encore entre 50 et 1000 ppm poids. les teneurs en composés soufrés peuvent être de l'ordre de 20 à 15000 ppm poids, voir de 100 à 10000 ppm poids.

Le gaz de synthèse brut, issu directement de la gazéification et ayant éventuellement été soumis à une étape de conversion du monoxyde de carbone à la vapeur d'eau (water gas shift selon la terminologie anglo-saxonne) afin d'ajuster le rapport H₂/CO, est généralement envoyé vers une ou plusieurs étapes de purification dédiées à l'élimination des métaux présents ainsi que la majeure partie des composés soufrés, azotés et halogénés. La ou lesdites étapes sont généralement réalisées par lavage à l'aide d'un solvant.

Le lavage au solvant est généralement mis en oeuvre à l'aide d'un solvant contenant au moins une amine telle que par exemple la monoéthanolamine (MEA), la diéthanolamine (DEA) ou la méthyldiéthanolamine (MDEA), ou un solvant contenant au moins un alcool tel que le méthanol. Des solvants à base de mélanges de dialkyl-éther de polyéthylène glycol (PEG) tels que des diéthyl éther ou dibutyl éther de PEG peuvent également être employés, ou encore des solvants mixtes physique et chimique tels que ceux obtenus par exemple à partir de mélanges d'une amine, telle que la MDEA ou la diisopropanolamine (DIPA), avec du sulfolane et de l'eau.

Suite à ce traitement, les teneurs en impuretés contenues dans le gaz de synthèse atteignent généralement des teneurs de 0,1 à 50 ppm poids pour les composés halogénés, de 0,1 à 50 ppm poids pour l'H₂S, de 0,1 à 50 ppm poids pour le COS, de 0,1 à 50 ppm poids pour les composés azotés.

L'élimination des composés halogénés présents dans le gaz de synthèse peut être opérée en amont ou en aval de l'étape de purification précédente, ou de toute autre étape de purification éventuellement mise en oeuvre.

Selon l'invention, l'élimination des composés halogénés est réalisée en utilisant une composition à base de TiO₂ en tant que masse de captation de composés halogénés, ladite composition comprenant entre 30 %poids et 99 %poids de TiO2 et entre 1 %poids et 30 %poids d'au moins un sulfate d'un métal alcalino-terreux choisi parmi le calcium, le baryum, le strontium et le magnésium. Ledit sulfate est préférentiellement du sulfate de calcium.

Selon une forme préférée de mise en oeuvre, la composition comprend entre 45 %poids et 98 %poids, très préférentiellement entre 60 %poids et 95 %poids, voire entre 70 %poids et 90 %poids de TiO₂.

De préférence ladite composition comprend entre 3 %poids et 25 %poids et de manière plus préférée entre 5 %poids et 15 %poids d'au moins un sulfate d'un métal alcalino-terreux choisi parmi le calcium, le baryum, le strontium et le magnésium. Ledit sulfate est préférentiellement du sulfate de calcium.

De préférence, la composition comprend également au moins un composé choisi parmi les argiles, les silicates, les alumines, le sulfate de titane, les fibres céramiques, de préférence les argiles ou les silicates, éventuellement les alumines, de manière très préférée les argiles, à une teneur totale comprise entre 0,1 %poids et 30 %poids, de préférence comprise entre 0,5 %poids et 25 %poids, de manière plus préférée comprise entre 1 %poids et 20 %poids, et de manière très préférée comprise entre 5 %poids et 15 %poids.

De préférence, la composition comprend en outre ente 0,1 et 20 %poids, de préférence entre 0,5 %poids et 15 %poids et plus préférentiellement entre 1 %poids et 10 %poids, d'un composé dopant ou d'une combinaison de composés dopants choisis parmi les composés de fer, de vanadium, de cobalt, de nickel, de cuivre, de molybdène et de tungstène. Le ou les composés dopants sont préférentiellement sous forme d'oxydes ou de sulfures. De préférence ledit composé dopant est du fer, du vanadium, du nickel ou du molybdène, de manière très préférée du fer ou du vanadium.

Dans une variante particulièrement avantageuse de mise en oeuvre, la composition comprend:
- entre 60 %poids et 95 %poids, voire entre 70 %poids et 90 %poids, d'oxyde de titane,
- entre 3 %poids et 25 %poids, voire entre 5 %poids et 15 % poids de sulfate d'un métal alcalino-terreux choisi parmi le calcium, le baryum, le strontium et le magnésium,
- entre 0,1 %poids et 20 %poids, voire entre 1 et 10 % poids d'un composé dopant ou d'une combinaison de composés dopants choisis parmi des composés de fer, de vanadium, de cobalt, de nickel, de cuivre, de molybdène et de tungstène, par exemple sous forme d'oxyde ou de sulfure.

La composition utilisée dans le procédé selon l'invention peut être préparée par toute méthode connue de l'homme du métier. L'apport de dopant(s) peut par exemple être effectué à l'occasion de la mise en forme de l'oxyde de titane et du sulfate d'alcalino-terreux, ou postérieurement à cette opération. Dans cette dernière hypothèse, une imprégnation à sec d'une ou plusieurs solutions de sels métalliques est préférée, la préparation s'achevant conventionnellement par un traitement thermique.

La composition ou masse de captation peut se présenter sous toute forme connue : poudre, billes, extrudés, monolithes, matériau concassé, etc. La forme préférée est l'extrudé, qu'il soit cylindrique ou polylobé. Dans le cas d'une mise en forme par malaxage suivi d'une extrusion, la section transversale de l'extrudé est avantageusement comprise entre 0,5 et 8 mm, de préférence comprise entre 0,8 et 5 mm.

Selon l'invention, l'utilisation de la masse de captation est effectuée soit dans un réacteur en lit fixe, soit dans un réacteur radial, ou bien encore dans un lit fluidisé, avec ou sans utilisation de plateau distributeur.

Les conditions d'utilisation sont telles que la pression est comprise entre 0,5 et 10 MPa, de préférence entre 1,5 et 3,5 MPa, et de manière encore plus préférée entre 2,0 et 3,0 MPa, la température comprise entre 100 et 350°C, de préférence entre 100 et 250°C.

Après élimination des composés halogénés, le gaz purifié présente une teneur résiduelle en composés halogénés inférieure à 10 ppb poids, voire 5 ppb poids pour chaque constituant.

En outre, la captation des impuretés halogénées est sans impact sur les propriétés catalytiques de la composition envers les réactions d'hydrolyse de COS et d'HCN, le solide conservant son activité initiale.

L'utilisation de la masse de captation est effectuée en amont d'une unité de synthèse Fischer-Tropsch qui est généralement mise en oeuvre sous une pression comprise entre 0,1 et 15 MPa, de préférence comprise entre 1,5 et 5 MPa et à une température comprise entre 150 et 400°C, de préférence comprise entre 170 et 350°C.

L'unité de synthèse Fischer-Tropsch opère soit en lit fluidisé, soit en lit fixe (réacteur contenant un catalyseur en lit fixe ou bien encore plusieurs lits de catalyseur dans un même réacteur), soit dans un réacteur triphasique (mise en oeuvre en "slurry" selon la terminologie anglo-saxonne) comprenant le catalyseur en suspension dans une phase liquide essentiellement inerte et la phase gazeuse réactive (gaz de synthèse).

Le catalyseur utilisé pour la synthèse Fischer-Tropsch est généralement un catalyseur contenant du cobalt ou du fer supporté ou non, le support étant préférentiellement choisi parmi les oxydes du groupe formé par l'alumine, la silice, la zircone, l'oxyde de titane, l'oxyde de magnésium ou leurs mélanges.

L'utilisation de la masse de captation pour éliminer les composés halogénés d'un gaz de synthèse est plus particulièrement adaptée lorsque le catalyseur utilisé pour la synthèse Fischer-Tropsch comprend du cobalt, par exemple supporté sur alumine.

L'invention concerne l'utilisation de ladite composition conjointement comme masse de captation pour éliminer les impuretés halogénées telles que HF, HCl, HBr ou HI contenues dans un gaz de synthèse et comme catalyseur permettant de réaliser l'hydrolyse de COS et/ou d'HCN.

### Exemples:

### Exemple 1 (selon l'invention):

Une composition comprenant 85,5% poids de TiO₂ 0,5 % poids d'Al₂O₃, 10% poids de CaSO₄. Celle-ci se présente sous la forme d'extrudés de 2 mm de diamètre. La composition est utilisée dans un réacteur en lit fixe pour purifier un gaz de synthèse contenant approximativement 61% volume de CO, 19% volume de H₂, 10% volume de N₂ et 10% volume de CO2 comme composés majoritaires, ainsi que des impuretés à des teneurs de 5 ppm poids de HCl, 0,8 ppm poids de HF, 4 ppm poids de HBr, 1,5 ppm poids de HI, 10000 ppm poids de H₂S, 1200 ppm poids de COS, 100 ppm poids de HCN, et 3 ppm poids de NH₃.

Les conditions d'utilisation sont les suivantes :
Température: 180°C
Pression : 2,3 MPa
Vitesse volumique horaire (VVH) : 2500 h⁻¹.

La composition du gaz avant et après purification est donnée dans le tableau 1.

**Tableau 1**

| Impuretés présentes dans le gaz | teneur (ppm poids) avant purification | teneur (ppb poids) après purification |
|---|---|---|
| H₂S | 10000 | Non analysé |
| NH₃ | 3 | Non analysé |
| COS | 1200 | <5 |
| HCN | 100 | <5 |
| HCl | 5 | <5 |
| HF | 0,8 | <5 |
| HBr | 4 | <5 |
| HI | 1,5 | <5 |

Les résultats du tableau 1 montrent que les composés halogénés initialement présents ont été complètement éliminés du gaz traité. En outre, l'utilisation de la composition a également permis d'hydrolyser conjointement les impuretés COS et HCN. La captation des composés halogénés n'a donc pas eu d'effet de désactivation du solide vis-à-vis de la catalyse des réactions d'hydrolyse de COS et HCN.

Par ailleurs, la masse de captation utilisée a été analysée par une technique de dosage semi-quantitative basée sur une analyse par Fluorescence X. La composition de la masse avant et après utilisation est donnée dans le tableau 2. On constate effectivement que les impuretés halogénées initialement présentes dans le gaz à traiter ont été piégées sur le solide.

**Tableau 2**

| Impuretés halogénées | teneur (% poids) avant utilisation | teneur (% poids) après utilisation |
|---|---|---|
| Fluor | Non détecté | 0,05 |
| Chlore | Non détecté | 0,3 |
| Iode | Non détecté | 0,1 |
| Brome | Non détecté | 0,24 |

### Exemple 2 (selon l'invention):

Une composition comprenant 85,5% poids de TiO₂, 0,5 % poids d'Al₂O₃, 10% poids de CaSO₄. Celle-ci se présente sous la forme d'extrudés de 2 mm de diamètre. La composition est utilisée dans un réacteur en lit fixe pour purifier un gaz de synthèse contenant approximativement 36% volume de CO, 24% volume de H₂, 20% volume de H₂O et 18,5 % volume de CO2 comme composés majoritaires, ainsi que des impuretés à des teneurs de 25 ppm poids de HCl, 1,5 ppm poids de HBr, 10000 ppm poids de H₂S, 800 ppm poids de COS, 640 ppm poids de HCN, et 2000 ppm poids de NH₃.

Les conditions d'utilisation sont les suivantes :
Température: 190°C
Pression : 2,5 MPa
Vitesse volumique horaire (WH) : 4000 h⁻¹.

La composition du gaz avant et après purification est donnée dans le tableau 3.

**Tableau 3**

| Impuretés présentes dans le gaz | teneur (ppm poids) avant purification | teneur (ppb poids) après purification |
|---|---|---|
| H₂S | 10000 | Non analysé |
| NH₃ | 2000 | Non analysé |
| COS | 800 | <5 |
| HCN | 640 | <5 |
| HCl | 25 | <5 |
| HBr | 1,6 | <5 |

Les résultats du tableau 3 montrent que les composés halogénés initialement présents ont été complètement éliminés. L'utilisation de la composition a également permis d'éliminer conjointement COS et HCN. Il n'y a pas de désactivation du solide relative à ses propriétés de catalyse des réactions d'hydrolyse de COS et HCN.

Par ailleurs, la masse de captation utilisée a été analysée par une technique de dosage semi-quantitative basée sur une analyse par Fluorescence X. La composition de la masse avant et après utilisation est donnée dans le tableau 4. On constate effectivement que les impuretés halogénées initialement présentes dans le gaz à traiter ont été piégées sur le solide.

**Tableau 4**

| Impuretés halogénées | teneur (% poids) avant utilisation | teneur (% poids) après utilisation |
|---|---|---|
| Chlore | Non détecté | 0,18 |
| Brome | Non détecté | 0,012 |

## Revendications

1. Procédé de purification d'un gaz de synthèse mettant en oeuvre une composition en amont d'une unité de synthèse Fischer-Tropsch, le gaz de synthèse contenant, avant mise en contact avec la composition, une teneur en composés halogènes comprise entre 0.1 ppm poids et 1000 ppm poids, ladite composition étant utilisée conjointement comme masse de captation pour éliminer les impuretés halogénées telles que HF, HCl, HBr et/ou HI contenues dans le gaz et comme catalyseur permettant de réaliser l'hydrolyse de COS et/ou
d'HCN, de façon à obtenir un gaz de synthèse contenant une teneur en impuretés halogénées inférieure à 10 ppb poids, ladite composition comprenant entre 30 %poids et 99 %poids de TiO₂ et entre 1 %poids et 30 %poids d'au moins un sulfate d'un métal alcalino-terreux choisi parmi le calcium, le baryum, le strontium et le magnésium.

2. Procédé selon la revendication 1, dans laquelle ladite composition comprend entre 3 %poids et 25 %poids d'au moins un sulfate d'un métal alcalino-terreux choisi parmi le calcium, le baryum, le strontium et le magnésium.

3. Procédé selon l'une des revendications 1 ou 2, dans laquelle ledit sulfate est le sulfate de calcium.

4. Procédé selon la revendication 3, dans laquelle ladite composition comprend entre 60 %poids et 95 %poids de TiO₂.

5. Procédé selon l'une des revendications 1 à 4 dans laquelle ladite composition comprend en outre au moins un composé choisi parmi les argiles, les silicates, les alumines, le sulfate de titane, les fibres céramiques à une teneur totale comprise entre 0,1 %poids et 30 %poids.

6. Procédé selon l'une des revendications 1 à 5 dans laquelle ladite composition comprend en outre ente 0,1 %poids et 20 %poids, d'un composé dopant ou d'une combinaison de composés dopants choisis parmi les composés de fer, de vanadium, de cobalt, de nickel, de cuivre, de molybdène et de tungstène.

7. Procédé selon la revendication 6 dans laquelle le ou les composés dopants sont sous forme d'oxydes ou de sulfures.

8. Procédé selon l'une des revendications 1 à 7, dans laquelle la composition ou masse de captation est mise en forme par extrusion.

## Patentansprüche

1. Verfahren zur Reinigung eines Synthesegases unter Einsatz einer Verbindung stromaufwärts einer Fischer-Tropsch-Synthese-Einheit, wobei das Synthesegas vor dem Kontaktieren mit der Verbindung einen Gehalt an Halogenverbindungen enthält, der zwischen 0,1 ppm Gewicht und 1.000 ppm Gewicht beträgt, wobei die Verbindung gemeinsam als Aufnahmemasse zur Eliminierung der halogenierten Verunreinigungen wie HF, HCl, HBr und/oder HI verwendet wird, die im Gas enthalten sind, und als Katalysator, der eine Hydrolyse von COS und/oder von HCN so erlaubt, dass ein Synthesegas erhalten wird, welches einen Gehalt an halogenierten Verunreinigungen von weniger als 10 ppb Gewicht enthält, wobei die Vebindung zwischen 30 Gew.-% und 99 Gew.-% TiO₂ und zwischen 1 Gew.-% und 30 Gew.-% wenigstens eines Sulfates eines Erdalkalimetalls enthält, ausgewählt aus Calcium, Barium, Strontium und Magnesium.

2. Verfahren gemäß Anspruch 1, bei dem die Verbindung zwischen 3 Gew.-% und 25 Gew.-% wenigstens eines Sulfates eines Erdalkalimetalls enthält, ausgewählt aus Calcium, Barium, Strontium und Magnesium.

3. Verfahren gemäß Anspruch 1 oder 2, bei dem das Sulfat Calciumsulfat ist.

4. Verfahren gemäß Anspruch 3, bei dem die Verbindung zwischen 60 Gew.-% und 95 Gew.-% TiO₂ enthält.

5. Verfahren gemäß einem der Ansprüche 1 bis 4, bei dem die Verbindung darüber hinaus wenigstens einen Stoff ausgewählt aus den Tonen, den Silikaten, den Aluminiumoxiden, den Titansulfaten, den keramischen Fasern mit einem Gesamtgehalt zwischen 0,1 Gew.-% und 30 Gew.-% enthält.

6. Verfahren gemäß einem der Ansprüche 1 bis 5, bei dem die Verbindung darüber hinaus zwischen 0,1 Gew.-% und 20 Gew.-% einer dopierenden Verbindung enthält oder einer Kombination der dopierenden Verbindungen ausgewählt aus den Verbindungen des Eisens, des Vanadiums, des Kobalts, des Nickels, des Kupfers, des Molybdäns und des Wolframs.

7. Verfahren gemäß Anspruch 6, bei dem die eine oder mehreren dopierenden Verbindungen in ihrer oxidischen oder schwefligen Form vorliegen.

8. Verfahren gemäß einem der Ansprüche 1 bis 7, bei dem die Verbindung oder Aufnahmemasse mittels Extrusion geformt wird.

## Claims

1. Process for purification of a synthesis gas by using a composition upstream from a Fischer-Tropsch synthesis unit, the synthesis gas containing, prior to contact with the composition, a content of halogenated compounds of between 0.1 ppm by wt. and 1000 ppm by wt, said composition being used conjointly as a capture mass for eliminating halogenated impurities such as HF, HCl, HBr and/or HI contained in the gas and as a catalyst to permit the carrying out of hydrolysis of COS and/or of HCN, so as to obtain a synthesis gas containing a content of halogenated impurities less than 10 ppb by wt., said composition comprising between 30 wt. % and 99 wt. % of TiO₂ and between 1 wt. % and 30 wt. % of at least one sulfate of an alkaline-earth metal selected from calcium, barium, strontium and magnesium.

2. Process according to Claim 1, wherein said composition comprises between 3 wt. % and 25 wt. % of at least one sulfate of an alkaline-earth metal selected from calcium, barium, strontium and magnesium.

3. Process according to one of Claims 1 or 2, wherein said sulfate is calcium sulfate.

4. Process according to Claim 3, wherein said composition comprises between 60 wt. % and 95 wt. % of TiO₂.

5. Process according to one of Claims 1 to 4, wherein said composition further comprises at least one compound selected from clays, silicates, aluminas, titanium sulfate, and ceramic fibres with a total content of between 0.1 wt. % and 30 wt. %.

6. Process according to one of Claims 1 to 5, wherein said composition further comprises between 0.1 wt. % and 20 wt. % of a doping compound, or a combination of doping compounds selected from compounds of iron, vanadium, cobalt, nickel, copper, molybdenum and tungsten.

7. Process according to Claim 6, wherein the doping compound(s) are in the form of oxides or sulfides.

8. Process according to one of Claims 1 to 7, wherein the capture composition or mass is shaped by extrusion.
